# EUROPÄISCHE PATENTSCHRIFT

(11) **EP 1 333 205 B1**
(45) Veröffentlichungstag und Bekanntmachung des Hinweises auf die Patenterteilung: **15.03.2006**
(21) Anmeldenummer: 02027451.0
(22) Anmeldetag: 10.12.2002
(51) Int. Cl.: F16K 3/06

(54) **Drehschieber**
Rotary gate valve
Tiroir rotatif

(30) Priorität: 31.01.2002 DE 10204030
(43) Veröffentlichungstag der Anmeldung: 06.08.2003
(73) Patentinhaber: Georg Fischer Wavin AG, 4553 Subingen (CH)
(72) Erfinder: Schuster, Bernd, 8207 Schaffhausen (CH); Schwarz, Bernd, 78224 Singen (DE); Nikles, Rudolf, 5036 Oberentfelden (CH)
(74) Vertreter: Weiss, Wolfgang

(56) Entgegenhaltungen:
- EP-A- 0 872 676
- EP-A- 1 063 457
- DE-A- 3 610 975
- DE-A- 3 834 974
- DE-A- 4 313 633
- DE-A- 4 414 115

## Beschreibung

Die Erfindung bezieht sich auf einen Drehschieber für eine mediumsführende Rohrleitung umfassend ein mit zwei Anschlussbereichen zwischen zwei Rohrleitungsenden einbaubares Gehäuse mit einem Sperrglied zum Absperren der Rohrleitung und mit einer Betätigungsvorrichtung zur Betätigung des Sperrgliedes, wobei das Gehäuse einen ersten Aufnahmebereich zur Aufnahme des Sperrgliedes in der geschlossenen Stellung des Drehschiebers, einen zweiten Aufnahmebereich zur Aufnahme des Sperrgliedes in der geöffneten Stellung des Drehschiebers und einen Antriebsbereich zur Aufnahme der Betätigungsvorrichtung aufweist, wobei der Antriebsbereich in dem Gehäuse getrennt von dem ersten und zweiten Aufnahmebereich angeordnet ist.

Im Rohrleitungsbau werden Schieber oder Klappen als Absperrorgane in Haupt- und Verteilleitungen eingesetzt. Das Absperrorgan wird in der mediumsführenden Rohrleitung eingebaut und besteht im Wesentlichen aus einem ersten Bereich zum Anschluss an die Rohrleitung, einem zweiten Bereich zur Aufnahme des Sperrgliedes im geöffneten Zustand des Absperrorgans und einen dritten Bereich zur Aufnahme der Betätigungsvorrichtung, die üblicherweise als Spindeltrieb ausgebildet wird. Die Schieber weisen oft auf beiden Seiten des Schiebergehäuse Flansche auf, mit denen das Absperrorgan in die Rohrleitung eingebaut werden kann. Die Rohrleitungen können als ein Verteilnetz eines Versorgungssystems ausgebildet sein. Das Medium in der Rohrleitung kann Gas, Wasser oder Abwasser sein. Auch in anderen Gebieten, beispielsweise der chemischen Verfahrenstechnik, werden Schieber oder Klappen eingesetzt, die ein senkrecht zur Rohrleitungsachse stehendes scheibenförmiges Absperrglied aufweisen, das in einer senkrecht zur Rohrleitungsachse verlaufenden Ebene aus der Rohrleitung bewegt wird.

Die Bewegungsart der Absperrscheibe kann eine geradlinige oder eine Dreh- oder Schwenkbewegung in dieser Ebene sein. Die Achse der Drehbewegung verläuft dabei senkrecht zur Rohrleitungsachse und kann innerhalb oder ausserhalb der Absperrscheibe liegen. Der wichtigste Vorteil dieser Bauart ist die relativ geringe Baulänge, das heisst der Platzbedarf in der axialen Richtung der Rohrleitung ist minimal. Bei einer Anordnung der drei oben erwähnten Bereiche, d.h. der erste Aufnahmebereich, der zweite Aufnahmebereich und der Antriebsbereich, auf einer Linie hintereinander wird jedoch die Bauhöhe relativ gross, das heisst, bei im Boden verlegten Leitungen mit einem Absperrorgan mit grosser Bauhöhe muss die Leitung selbst relativ tief eingegraben werden.

Aus der EP 1 063 457 A2 ist ein gattungsgemässer Drehschieber bekannt. Es wird ein sogenannter Pendelschieber für Anwendungen unter Hochvakuum in hoch reinen Gasbedämpfungsanlagen beschrieben. Der Drehschieber wird in einer Vakuumanlage zusammen mit einer Turbovakuumpumpe als Regelorgan verwendet um das Vakuum in der Anlage möglichst genau einstellen zu können. Das Gehäuse und der Schieber sind aus mehreren einzelnen Teilen aus Metall aufgebaut und für eine relativ geringe Druckfestigkeit ausgelegt. Der Schieber wird anschliessend an die Schwenkbewegung von der geöffneten Stellung in der Schliessstellung auf einen Sitz im Gehäuse angedrückt. Der Hebelarm, der die Absperrscheibe mit der Betätigungsvorrichtung verbindet, wirkt zusammen mit einer Rampe im Bereich der Schwenkachse der Betätigungsvorrichtung. Mit dieser Rampe wird erreicht, dass die Scheibe am Ende der Schwenkbewegung in axialer Richtung zum Sitz hin bewegt wird.

Aus der DE 4313633 A1 ist weiterhin eine Absperrvorrichtung für Gasversorgungsleitungen bekannt. Das Absperrglied ist eine flache Ventilscheibe, die zwischen zwei mit Flanschen ausgebildeten Gehäuseteilen aus Kunststoff angeordnet ist. Das erste Gehäuseteil und das zweite Gehäuseteil sind mit einer von unten nach oben gerichteten senkrecht zur Ventilscheibe verlaufenden Versorgungsleitung verbunden. Das zweite Gehäuseteil weist zusätzlich eine offene Querbohrung für eine waagrecht verlaufende Leitung auf. An dieser Absperrvorrichtung müssen somit drei Rohrleitungsenden angeschlossen werden.

Die Antriebsachse für die Bewegung der Ventilscheibe verläuft parallel zur Achse der Versorgungsleitung. Die Bewegung der Antriebsachse wird durch ein koaxial angeordnetes Untersetzungsgetriebe erleichtert.

Aus der DE 4414115 A1 ist weiterhin ein Absperrschieber für Förderleitungen von Schüttgütern bekannt. Das Gehäuse ist parallel zur Leitungsachse geteilt in einem ersten Aufnahmebereich zur Aufnahme des Schiebers in der geschlossenen Stellung und in einem zweiten Aufnahmebereich zur Aufnahme des Schiebers in der geöffneten Stellung. Die Betätigungsvorrichtung ist ausserhalb vom Gehäuse angeordnet und umfasst einen Schwenkhebel und einen Zylinder als Schwenkantrieb.

Ausgehend von diesem Stand der Technik ist es Aufgabe der Erfindung, einen Drehschieber vorzuschlagen, der aus möglichst wenigen und einfach herzustellenden Einzelteilen möglichst kompakt und korrosionsbeständig aufgebaut werden kann. Der Drehschieber soll auch möglichst einfach in bestehenden Rohrleitungssystemen eingebaut werden können.

Diese Aufgabe wird gelöst durch einen Drehschieber für eine mediumsführende Rohrleitung umfassend ein mit zwei Anschlussbereichen zwischen zwei Rohrleitungsenden einbaubares Gehäuse mit einem Sperrglied zum Absperren der Rohrleitung und mit einer Betätigungsvorrichtung zur Betätigung des Sperrgliedes, wobei das Gehäuse einen ersten Aufnahmebereich zur Aufnahme des Sperrgliedes in der geschlossenen Stellung des Drehschiebers, einen zweiten Aufnahmebereich zur Aufnahme des Sperrgliedes in der geöffneten Stellung des Drehschiebers und einen Antriebsbereich zur Aufnahme der Betätigungsvorrichtung aufweist, wobei der Antriebsbereich in dem Gehäuse getrennt von dem ersten und zweiten Aufnahmebereich angeordnet ist, wobei die Betätigungsvorrichtung einen Hebelarm, eine Mutter und eine Spindel aufweist, wobei die Spindel senkrecht zur Achse der Anschlussbereiche angeordnet ist.

Die räumlich abgetrennte Anordnung des Antriebsbereiches trägt in hohem Masse zur Erhöhung der Korrosionsbeständigkeit und der Lebensdauer des Drehschiebers bei.

Bevorzugte Weiterbildungen der Erfindung ergeben sich aus den abhängigen Ansprüchen.

Es ist von Vorteil, dass der Drehschieber möglichst kompakt aufgebaut ist. Dies wird dadurch erreicht, dass sowohl die Aufnahmebereiche als auch der Antriebsbereich in der Richtung der Rohrleitungsachse gesehen drei im Wesentlichen gleich grosse Bereiche des Gehäuses bilden. Dies wird auch dadurch erreicht, dass die Aufnahmebereiche und der Antriebsbereich in der Richtung der Rohrleitungsachse gesehen im Wesentlichen in der Art eines gleichseitigen Dreiecks benachbart zueinander im Gehäuse angeordnet sind. Die kompakte Bauart des Drehschiebers führt dazu, dass Rohrleitungen, die im Boden verlegt werden, nicht mehr unnötig tief eingegraben werden müssen.

Es ist auch von Vorteil, dass der Drehschieber einfach hergestellt werden kann. Dies wird dadurch erreicht, dass der Antriebsbereich, der erste Aufnahmebereich und zumindest der grösste Teil des zweiten Aufnahmebereiches als einem einstückigen Gehäuse ausgebildet sind. Dies wird auch dadurch erreicht, dass das Gehäuse im Wesentlichen gegenüber einer senkrecht zur Rohrleitungsachse durch das Gehäuse verlaufenden Spiegelfläche nahezu spiegelsymmetrisch ausgebildet ist.

Es ist weiter auch von Vorteil, dass für den Drehschieber auch beim Einsatz in Rohrleitungen, die korrosive Medien führen, eine möglichst lange Lebensdauer gewährleistet werden kann. Dies wird dadurch erreicht, dass die Betätigungsvorrichtung in dem Antriebsbereich abgedichtet gegen das Medium in dem ersten und dem zweiten Aufnahmebereich angeordnet ist. Dies wird beispielsweise auch dadurch erreicht, dass das Gehäuse mit den Aufnahmebereichen und der Antriebsbereich jeweils aus einem korrosionsbeständigen Werkstoff ausgebildet sind. Dies wird beispielsweise auch dadurch erreicht, dass das Gehäuse mit den Aufnahmebereichen und der Antriebsbereich jeweils aus einem Guss in einem Kunststoffspritzgussverfahren ausgebildet ist. Dies wird auch dadurch erreicht, dass sämtliche Bereiche des Absperrorganes, die vom Medium berührt werden können, aus einem korrosionsbeständigen Werkstoff ausgebildet sind. Dies wird weiter auch dadurch erreicht, dass sämtliche Bereiche des Absperrorganes, die vom Medium berührt werden können, aus einem reinen oder einem verstärkten Kunststoffmaterial ausgebildet sind.

Es ist auch von Vorteil, dass der Drehschieber einfach in einer bestehenden Rohrleitung eingebaut werden kann. Dies wird dadurch erreicht, dass das Gehäuse im ersten Aufnahmebereich auf zwei gegenüberliegenden Seiten jeweils einen Anschlussbereich zum Anschluss an die mediumsführende Rohrleitung aufweisen, wobei zumindest der Werkstoff des Anschlussbereiches kompatibel mit dem Werkstoff der Rohrleitung ist. Dies wird auch dadurch erreicht, dass der Anschlussbereich als eine Elektroschweissmuffe ausgebildet ist.

Ausführungsbeispiele der Erfindung werden anhand der Figuren beschrieben. Es zeigen:
Figur 1 eine Sicht auf einen erfindungsgemässen Drehschieber mit einem Abschlussdeckel,
Figur 2 eine weitere Sicht auf den Drehschieber von Figur 1,
Figur 3 eine perspektivische Sicht auf den Drehschieber von Figuren 1 und 2,
Figur 4 eine Sicht auf den Drehschieber von Figur 1 ohne Abschlussdeckel,
Figur 5 eine perspektivische Sicht auf den Drehschieber von Figur 4,
Figur 6 eine Sicht auf den Drehschieber von Figuren 1 bis 3 mit einem Sperrglied und mit einer Betätigungsvorrichtung,
Figur 7 einen Schnitt durch den Drehschieber von Figur 6,
Figur 8 eine Sicht auf den Drehschieber von Figur 6 mit einer Drehmomentbegrenzungseinrichtung,
Figur 9 eine Schnitt durch den Drehschieber von Figur 8,
Figur 10 eine perspektivische Sicht auf einen einbaufertigen Drehschieber,
Figur 11 eine Sicht auf den Drehschieber von Figur 10 und
Figur 12 eine weitere Sicht auf den Drehschieber von Figur 10.

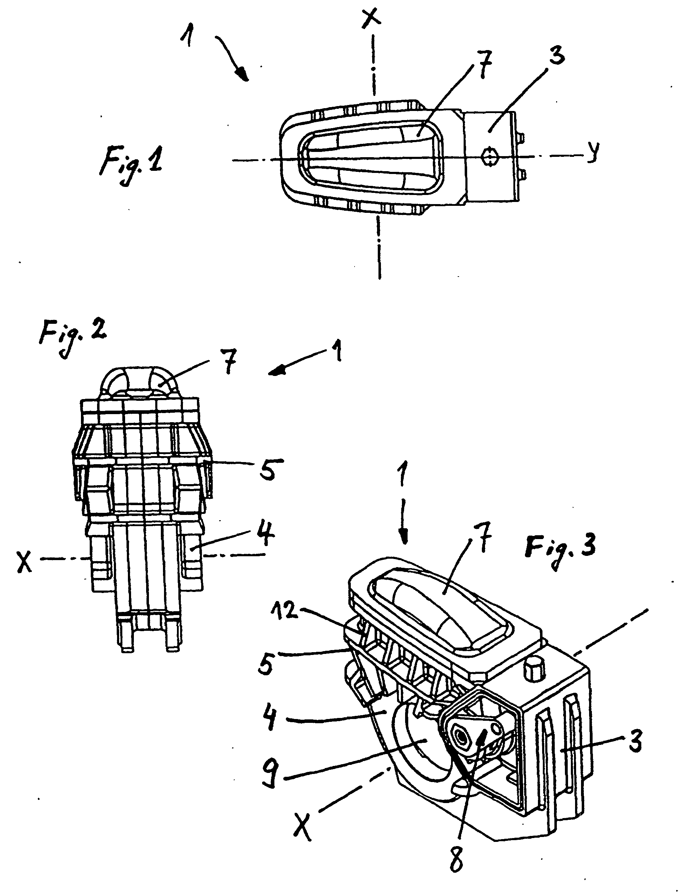

In Figur 1 ist ein Gehäuse 1 eines erfindungsgemässen Drehschiebers gesehen von oben auf das Gehäuse 1, das heisst in einer Richtung, die senkrecht zur Rohrleitungsachse X verläuft, dargestellt. Das Gehäuse 1 ist gegenüber einer Spiegelfläche Y, die senkrecht zur Rohrleitungsachse X verläuft, spiegelsymmetrisch oder im Wesentlichen spiegelsymmetrisch ausgebildet. Oben auf dem Gehäuse 1 ist ein Abschlussdeckel 7 angeordnet, der das Gehäuse von oben abschliesst. Seitlich neben der Rohrleitungsachse X ist ein Antriebsbereich 3 ersichtlich.

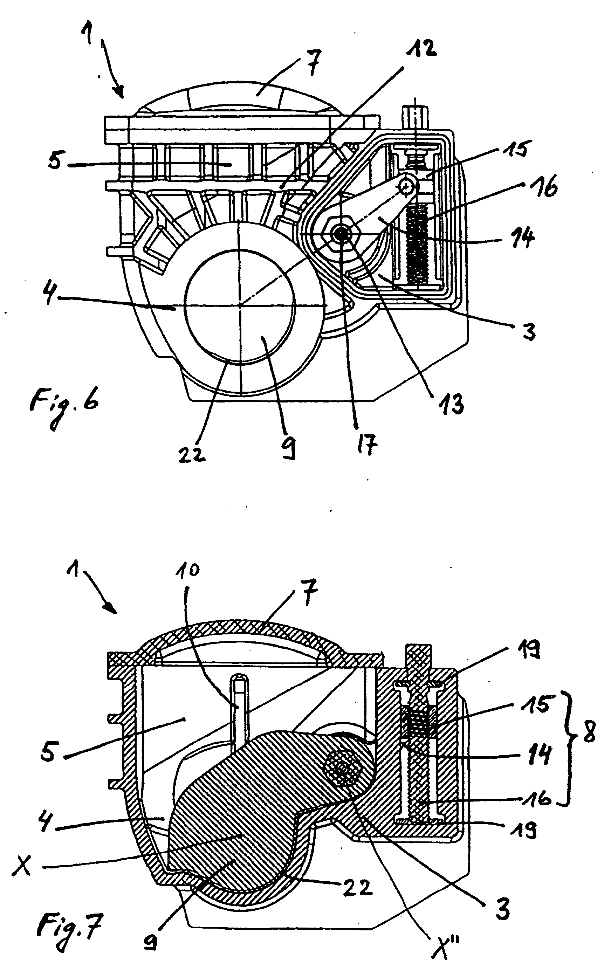

In Figur 2 ist das Gehäuse 1 von Figur 1 in einer seitlichen Ansicht dargestellt. In Figuren 1 und 2 sind der Antriebsbereich 3, ein erster Aufnahmebereich 4 und ein zweiter Aufnahmebereich 5 ersichtlich. Angrenzend an dem zweiten Aufnahmebereich 5 ist der Abschlussdeckel 7 ersichtlich. Der Antriebsbereich 3 dient zur Aufnahme einer Betätigungsvorrichtung 8, die in den Figuren 6 bis 9 besser ersichtlich ist. Die Betätigungsvorrichtung dient zur Betätigung eines Sperrgliedes 9. Das Sperrglied 9 kann mittels der Betätigungsvorrichtung 8 im Antriebsbereich 3 vom ersten Aufnahmebereich 4 in den zweiten Aufnahmebereich 5 bewegt werden. Wenn das Absperrorgan sich in der geschlossenen Stellung befindet, wird das Sperrglied 9 im ersten Aufnahmebereich 4 aufgenommen, und wenn das Absperrorgan sich in der offenen Stellung befindet, wird das Sperrglied 9 im zweiten Aufnahmebereich 5 unterhalb des Abschlussdeckels 7 aufgenommen. Somit wird die Rohrleitung, die mit dem ersten Aufnahmebereich 4 des Gehäuses 1 verbunden werden kann, für das Medium freigegeben. Der Abschlussdeckel 7, kann mit dem Gehäuse 1 durch Verkleben oder Verschweissen unlösbar oder durch Verschrauben lösbar verbunden werden. Der Abschlussdeckel 7 kann die Stabilität des Gehäuses 1 erhöhen. Wenn das Sperrglied 9 ausgewechselt werden muss und wenn die Innenwände des Gehäuses 1 gereinigt werden müssen, kann der Abschlussdeckel 7 auch derart ausgeführt sein, dass dieser entfernt werden kann. Das Gehäuse 1 kann wahlweise auch aus zwei nahezu spiegelsymmetrischen Hälften aufgebaut sein.

In Figur 3 ist ersichtlich, wie der Antriebsbereich 3, der erste Aufnahmebereich 4 und der zweite Aufnahmebereich 5 beispielsweise alle einen etwa gleich grossen Teil des Gehäuses 1 einnehmen. In der Richtung der Rohrleitungsachse X gesehen können die drei Bereiche 3,4,5 beispielsweise etwa gleich grosse Querschnittsflächen einnehmen. Die Aufnahmebereiche 4,5 und der Antriebsbereich 3 sind zueinander wie etwa auf den Eckpunkten eines gleichseitigen oder zumindest eines gleichschenkeligen Dreieckes angeordnet.

Das Gehäuse 1 hat somit in einer Ebene, die senkrecht zur Rohrleitungsachse X verläuft, eine möglichst kleine Flächenausdehnung. Durch diese Anordnung wird eine möglichst kompakte Ausführung des Absperrorganes erreicht. Die Grabarbeiten, die notwendig sind für den Einbau von Rohrieitungssystemen mit dem erfindungsgemässen Absperrorgan werden auf ein Minimum beschränkt. Die Bauhöhe des Gehäuses 1 ist minimal, das heisst die Rohrleitungen können wesentlich dichter unter der Erdoberfläche verlegt werden.

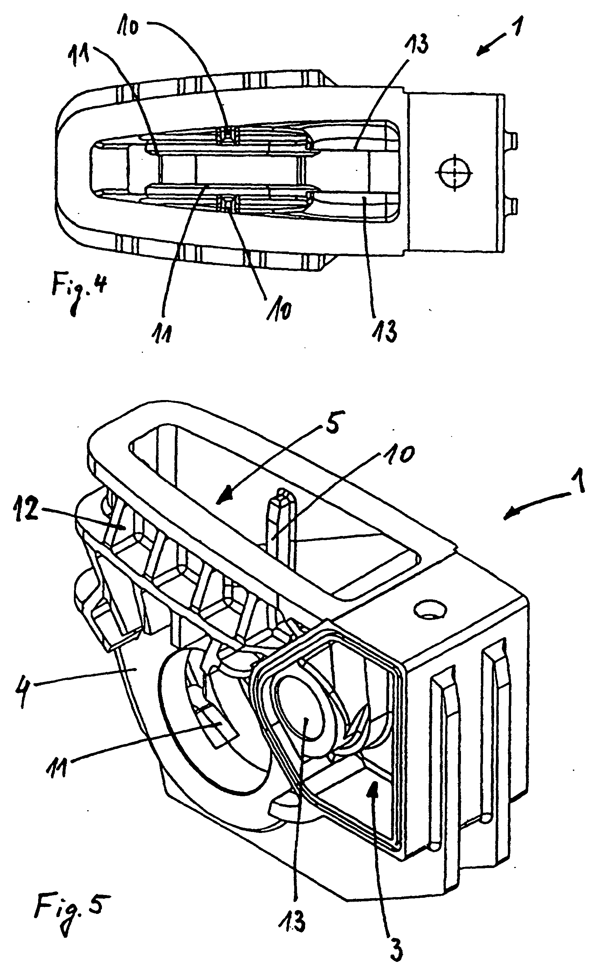

In den Figuren 4 und 5 ist das Gehäuse 1 ähnlich wie in den Figuren 1 und 3 dargestellt, jedoch ohne Abschlussdeckel 7. Auch das Absperrglied 9 wurde weggelassen um die Sicht auf das Innere des Gehäuses 1 freizugeben. Im Inneren des Gehäuses 1 sind Führungsrippen 10 und Dichtflächen 11 ersichtlich, die für eine Führung und Abdichtung des Absperrgliedes 9 dienen. Auch die Betätigungsvorrichtung 8 wurde weggelassen. Im Antriebsbereich 3 ist eine Lagerstelle 13 ersichtlich. Die Lagerstelle 13 ist an der Schnittstelle zwischen den beiden Aufnahmebereichen 4,5 und dem Antriebsbereich 3 angeordnet. Die Lagerstelle 13 kann ebenfalls spiegelsymmetrisch auf der Vorderseite und der Rückseite des Gehäuses 1 ausgebildet sein. Das Gehäuse 1 kann beispielsweise aus einem Guss in einem Spritzgussverfahren aus einem reinen oder verstärkten Kunststoffmaterial oder aus einem anderen korrosionsbeständigen Werkstoff hergestellt werden. Als Kunststoffmaterial für erdverlegten Rohrleitungen kann beispielsweise Polyäthylen oder Polypropylen verwendet werden. Als Verstärkungsmittel können Glas- oder Kohlefasem oder andere nicht-polymere Werkstoffe verwendet werden. Sämtliche Bereiche, die vom Medium in der Rohrleitung berührt werden können, sind aus einem geeigneten Kunststoffmaterial. Hiermit wird ein hoher Widerstand gegen Korrosion gewährleistet.

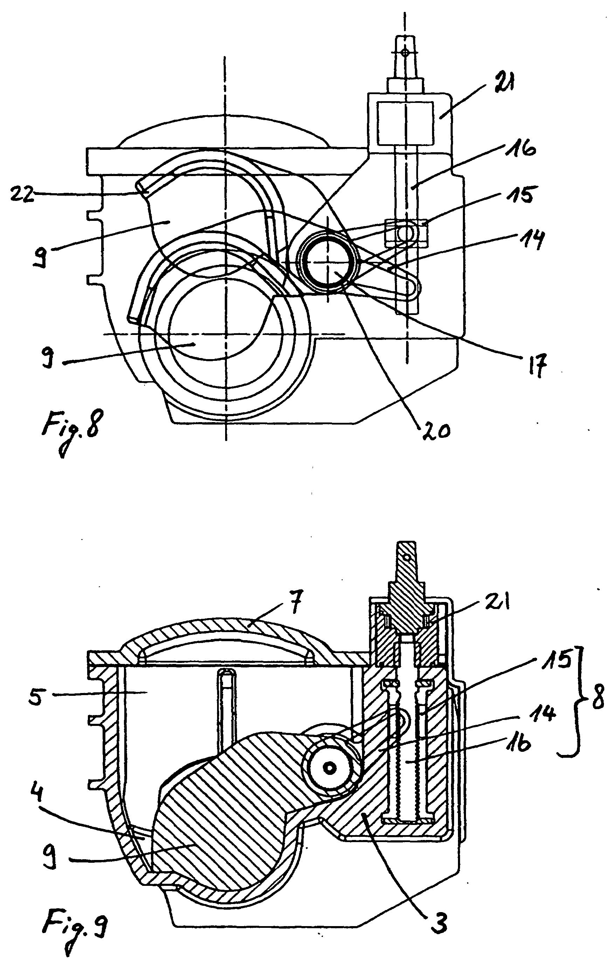

In den Figuren 6 und 7 ist das Gehäuse 1 gesehen in der Richtung der Rohrleitungsachse X dargestellt. Figur 7 stellt das Gehäuse 1 geschnitten in einer Ebene senkrecht zur Rohrleitungsachse X dar. Diese Ebene kann auch die Ebene Y der Symmetrie für das Gehäuse 1 sein. Aus den Figuren 6 und 7 geht auch die kompakte Anordnung der beiden Aufnahmebereiche 4, 5 und der Antriebsbereich 3 gut hervor. In den Figuren 3, 5 und 6 sind auf der Aussenseite des Gehäuses 1 auch Rippen 12 ersichtlich. Die Rippen 12 können als Längs- und beziehungsweise oder als Querrippen ausgebildet sein. Die Rippen 12 dienen unter anderem als Verstärkungsrippen für die Wände des Gehäuses 1. Durch die Anordnung der Verstärkungsrippen 12 können die Wände des Gehäuses 1 wesentlich dünner hergestellt werden, was erheblich zur Material- und Gewichtseinsparung des Gehäuses 1 beiträgt. Die Lagerstelle 13 befindet sich dort, wo die drei Bereiche 3,4,5 zusammen treffen. Das Sperrglied 9 ist im Wesentlichen eine Scheibe aus Kunststoffmaterial. Die Scheibe 9 ist im Bereich der Lagerstelle 13 fest verbunden mit einem Hebelarm 14, der wiederum beweglich verbunden ist mit einer Mutter 15, die von einer Spindel 16 auf und ab bewegt wird. Die Spindel 16, die Mutter 15 und der Hebelarm 14 sind vorzugsweise alle aus Metall hergestellt. Die Spindel, die Mutter und der Hebelarm können jedoch auch aus einem Kunststoff oder beispielsweise auch aus einem faserverstärkten Kunststoffmaterial ehrgestellt werden, wenn die auftretenden Kräften dies zulassen.

Der Hebelarm 14 kann sowohl einseitig als auch doppelseitig ausgeführt sein. In der doppelseitigen Ausführung befinden sich auf beiden Seiten des Gehäuses 1 zwei identische Hebelarme 14. Der Antriebsbereich 3 wird vom Medium nicht berührt. Die Spindel 16 kann mit einem nicht dargestellten Antriebsmotor zum Antrieb der Spindel verbunden werden. Durch die Kombination der Spindel 16 mit dem Hebel 14 und der Mutter 15 wird eine Übersetzung zwischen der Bewegung der Scheibe 9 und der Spindel 16 erreicht. Diese Kombination hat zur Folge, dass die Spindel 16 eine kürzere Länge hat als bei handelsüblichen Drehschiebern. Dies trägt bei zu einem kleineren Gehäuse 1 und zu einer möglichst kompakten Bauweise des Drehschiebers. Die Spindel 16 wird durch die Übersetzung auch weniger belastet und kann deshalb dementsprechend einfacher und leichter ausgeführt werden.

Im Bereich der Lagerstelle 13 befindet sich auch eine Welle 17, die beispielsweise aus Metall hergestellt ist. Die Welle 17, die auch als Drehlager dient, dreht sich um eine Achse X", die parallel zur Rohrleitungsachse X angeordnet ist. Die Abdichtung des Antriebsbereiches 3 wird erreicht durch Dichtungen 20, die auf die Welle 17, zwischen der Welle 17 und der Vorder- und Rückseite des Gehäuses 1 im Bereich der Lagerstelle 13 angeordnet sind. Die Spindel 16 wird im Antriebsbereich 3 gelagert und gehalten von zwei Platten 19, die auch als oberer und unterer Anschlag für die Mutter 15 dienen.

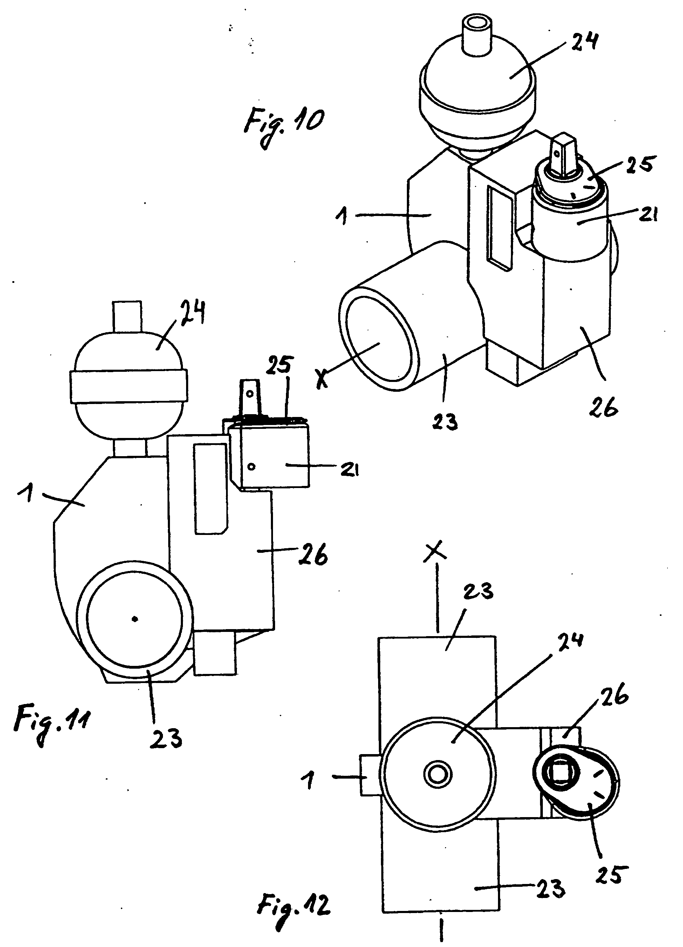

In den Figuren 8 und 9 ist das Absperrorgan nochmals ähnlich wie in den Figuren 6 und 7 abgebildet. In Figur 8 ist ersichtlich, wie die Scheibe 9 von dem ersten Aufnahmebereich 4 in den zweiten Aufnahmebereich 5 weggeschwenkt werden kann, wenn die Kombination von Mutter 15 und Spindel 16 betätigt wird. Die Scheibe 9 und der Hebelarm 14 sind in zwei unterschiedlichen Stellungen gezeichnet. Eine obere Stellung, bei der die Scheibe 9 vollständig aus dem ersten Aufnahmebereich 4 in den zweiten Aufnahmebereich 5 weggeschwenkt wurde und bei der die Rohrleitung vollständig für den Durchlass des Mediums freigegeben wird, und eine zweite Stellung, bei der die Scheibe 9 sich noch teilweise im ersten Aufnahmebereich 4 befindet. In Figur 8 ist auch eine Dichtung 20 zur Abdichtung der Welle 17 und des Antriebsbereiches 3 gegen das Medium ersichtlich.

In den Figuren 8 und 9 ist oben auf der Spindel 16 eine Einrichtung 21 zur Begrenzung des Drehmomentes der Betätigungsvorrichtung 8 angeordnet. Die Drehmomentbegrenzungseinrichtung 21 ist hier als eine Rutschkupplung ausgebildet, kann jedoch auch beispielsweise als einen Scherstift ausgebildet sein. Mit der Rutschkupplung 21 wird verhindert, dass die Spindel 16 mit einem zu grossen Drehmoment betätigt wird. Vor allem in den beiden Endstellungen der Scheibe 9, das heisst sowohl in der vollständig geöffneten Stellung als auch in der vollständig geschlossenen Stellung des Absperrorganes wird hiermit verhindert, dass eine zu grosse Kraft auf die Scheibe 9 ausgeübt wird. Hiermit wird erreicht, dass das Absperrorgan gegen Fehlmanipulationen beim Öffnen und Schliessen unempfindlich ist. Die Rutschkupplung 21 kann so ausgebildet sein, dass ein hörbares Geräusch oder ein anderes Signal abgegeben wird, wenn das Drehmoment überschritten wird.

In den Figuren 6, 7 und 8 ist auch ersichtlich, wie zwischen Scheibe 9 und Gehäuse 1 eine Dichtung 22 angeordnet ist. Die Dichtung 22 ist ein Teil, beispielsweise aus einem Elastomermaterial, das im unteren Bereich der Scheibe 9 an dessen Umfang anliegt und im oberen Bereich der Scheibe 9 auf beiden Seiten im Randbereich der Scheibe 9 angeordnet ist. Im Herstellungsverfahren wird die Dichtung 22 vorzugsweise in die Spritzgussform der Scheibe 9 eingelegt und anschliessend daran mit dem Kunststoffmaterial der Scheibe 9 umspritzt. Die Dichtung 22 und die Scheibe 9 können als Alternative auch in einem sogenannten Zweikomponenten-Spritzgussverfahren mit einander verbunden werden. In diesem Verfahren wird zuerst eine erste Komponente der Verbindung, beispielsweise die Dichtung 22, aus einem ersten Kunststoffmaterial in die Form gespritzt und anschliessend daran mit dem Kunststoffmaterial der zweiten Komponente, beispielsweise die Scheibe 9, überspritzt werden. Die Dichtung 22 kann auch in der Endmontage von einem Automaten oder von Hand auf der Scheibe 9 befestigt werden. Die Kunststoffscheibe 9 bildet somit eine Einheit mit der Etastomerdichtung 22.

In den Figuren 10, 11 und 12 ist das Absperrorgan nochmals schematisch dargestellt. Figur 10 zeigt das Absperrorgan in einer perspektivischen Sicht, ähnlich wie in den Figuren 3 und 5. In den Figuren 10, 11 und 12 sind unter anderem ein Anschlussbereich 23 zur Verbindung des Gehäuses 1 mit der Rohrleitung, eine Entlüftungsvorrichtung 24 zur Entlüftung des Gehäuses 1, eine Stellungsanzeige 25 zur Anzeige der Stellung der Scheibe 9 und ein Verschlussstück 26 zum Abschluss des Antriebsbereiches 3 und des Gehäuses 1 ersichtlich. Die Stellungsanzeige 25 zur Anzeige der Stellung des Absperrorganes steht in Verbindung mit der Spindel 16. Die Stellungsanzeige 25 kann als eine mechanische, elektrische oder elektromagnetische Anzeige ausgebildet sein. Je nach Ausführungsart der Anzeige kann die Anzeige 25 der Schieberstellung auch in einer grösseren Entfernung vom Drehschieber abgelesen werden.

Die Anschlussbereiche 23 sind aus einem Kunststoffmaterial hergestellt, das kompatibel mit dem Material der anzuschliessenden Rohrleitung ist und das mit der Rohrleitung verschweisst werden kann. Die Anschlussbereiche 23 können beispielsweise als Elektroschweissmuffen ausgebildet sein. Der Drehschieber kann für Rohrleitungen mit Leitungsdurchmesser in einem verhältnismässig grossen Bereich, beispielsweise von DN (=Normdurchmesser) 15 bis DN 300 mm angewendet werden. Er kann eingesetzt werden für Verteilnetze und Hausanschlüsse von Gas- Wasser- und Abwassersystemen. Das Absperrorgan zeichnet sich aus durch einen modularen Aufbau mit verschiedenen Optionen, wie beispielsweise der Stellungsanzeige 25 und der Entlüftung 24, ist möglichst einfach und kompakt aufgebaut und weist in den vom Medium berührten Bereichen keine Teile auf, die korrosionsgefährdet sind.

## Patentansprüche

1. Drehschieber für eine mediumsführende Rohrleitung umfassend ein mit zwei Anschlussbereichen (23) zwischen zwei Rohrleitungsenden einbaubares Gehäuse (1) mit einem Sperrglied (9) zum Absperren der Rohrleitung und mit einer Betätigungsvorrichtung (8) zur Betätigung des Sperrgliedes, wobei das Gehäuse (1) einen ersten Aufnahmebereich (4) zur Aufnahme des Sperrgliedes (9) in der geschlossenen Stellung des Drehschiebers, einen zweiten Aufnahmebereich (5) zur Aufnahme des Sperrgliedes (9) in der geöffneten Stellung des Drehschiebers und einen Antriebsbereich (3) zur Aufnahme der Betätigungsvorrichtung (8) aufweist, wobei der Antriebsbereich (3) in dem Gehäuse (1) getrennt von dem ersten und zweiten Aufnahmebereich (4,5) angeordnet ist, **dadurch gekennzeichnet, dass** die Betätigungsvorrichtung (8) einen Hebelarm (14), eine Mutter (15) und eine Spindel (16) aufweist, wobei die Spindel (16) senkrecht zur Achse (X) der Anschlussbereiche (23) angeordnet ist.

2. Drehschieber nach Anspruch 1, **dadurch gekennzeichnet, dass** die Betätigungsvorrichtung (8) in dem Antriebsbereich (3) abgedichtet gegen das Medium in dem ersten und dem zweiten Aufnahmebereich (4,5) angeordnet ist.

3. Drehschieber nach mindestens einem der Ansprüche 1 oder 2, **dadurch gekennzeichnet, dass** der Antriebsbereich (3), der erste Aufnahmebereich (4) und zumindest der grösste Teil des zweiten Aufnahmebereiches (5) als einem einstückigen Gehäuse (1) ausgebildet sind.

4. Drehschieber nach mindestens einem der Ansprüche 1 bis 3, **dadurch gekennzeichnet, dass** sowohl die Aufnahmebereiche (4,5) als auch der Antriebsbereich (3) in der Richtung der Rohrleitungsachse X gesehen drei im Wesentlichen gleich grosse Bereiche des Gehäuses (1) bilden.

5. Drehschieber nach mindestens einem der Ansprüche 1 bis 4, **dadurch gekennzeichnet, dass** die Aufnahmebereiche (4,5) und der Antriebsbereich (3) in der Richtung der Rohrleitungsachse X gesehen im Wesentlichen in der Art eines gleichseitigen Dreiecks benachbart zueinander im Gehäuse (1) angeordnet sind.

6. Drehschieber nach mindestens einem der Ansprüche 1 bis 5, **dadurch gekennzeichnet, dass** das Gehäuse (1) im Wesentlichen gegenüber einer senkrecht zur Rohrleitungsachse X durch das Gehäuse verlaufenden Spiegelfläche Y nahezu spiegelsymmetrisch ausgebildet ist.

7. Drehschieber nach mindestens einem der Ansprüche 1 bis 6, **dadurch gekennzeichnet, dass** das Gehäuse (1) mit den Aufnahmebereichen (4,5) und der Antriebsbereich (3) jeweils aus einem korrosionsbeständigen Werkstoff ausgebildet sind.

8. Drehschieber nach mindestens einem der Ansprüche 1 bis 7, **dadurch gekennzeichnet, dass** das Gehäuse (1) mit den Aufnahmebereichen (4,5) und der Antriebsbereich (3) jeweils aus einem Guss in einem Kunststoffspritzgussverfahren ausgebildet ist.

9. Drehschieber nach mindestens einem der Ansprüche 1 bis 8, **dadurch gekennzeichnet, dass** sämtliche Bereiche des Absperrorganes, die vom Medium berührt werden können, aus einem korrosionsbeständigen Werkstoff ausgebildet sind.

10. Drehschieber nach mindestens einem der Ansprüche 1 bis 9, **dadurch gekennzeichnet, dass** sämtliche Bereiche des Absperrorganes, die vom Medium berührt werden können, aus einem reinen oder einem verstärkten Kunststoffmaterial ausgebildet sind.

11. Drehschieber nach mindestens einem der Ansprüche 1 bis 10, **dadurch gekennzeichnet, dass** eine Drehmomentbegrenzungseinrichtung (21) zur Begrenzung des Drehmomentes der Betätigungsvorrichtung (8) angeordnet ist.

12. Drehschieber nach mindestens einem der Ansprüche 1 bis 11, **dadurch gekennzeichnet, dass** die Drehmomentbegrenzungseinrichtung beispielsweise als eine Rutschkupplung (21) ausgebildet ist.

13. Drehschieber nach mindestens einem der Ansprüche 1 bis 12, **dadurch gekennzeichnet, dass** die Betätigungsvorrichtung (8) im Wesentlichen aus Metall herstellbar ist.

14. Drehschieber nach mindestens einem der Ansprüche 1 bis 13, **dadurch gekennzeichnet, dass** die Betätigungsvorrichtung (8) eine Spindel (16) aufweist, wobei die Spindel mittels einer Mutter (15) und einem Hebelarm (14) mit dem Sperrglied (9) wirkverbunden angeordnet ist.

15. Drehschieber nach mindestens einem der Ansprüche 1 bis 14, **dadurch gekennzeichnet, dass** das Sperrglied (9) und der Hebelarm (14) mittels einem gemeinsamen Drehlager (17) miteinander fest verbunden sind, wobei das Drehlager im Gehäuse (1) an der Schnittstelle zwischen dem ersten Aufnahmebereich (4), dem zweiten Aufnahmebereich (5) und dem Antriebsbereich (3) angeordnet ist.

16. Drehschieber nach mindestens einem der Ansprüche 1 bis 15, **dadurch gekennzeichnet, dass** zwischen dem Drehlager (17) und dem Medium Dichtungen (20) zur Dichtung gegen Berührung durch das Medium angeordnet sind.

17. Drehschieber nach mindestens einem der Ansprüche 1 bis 16, **dadurch gekennzeichnet, dass** eine Stellungsanzeige (25) zur Anzeige der Schieberstellung verbindbar mit der Spindel (16) angeordnet ist.

18. Drehschieber nach mindestens einem der Ansprüche 1 bis 17, **dadurch gekennzeichnet, dass** die Stellungsanzeige (25) als eine mechanische, elektrische oder elektromagnetische auf Entfernung ablesbare Anzeige ausgebildet ist.

19. Drehschieber nach mindestens einem der Ansprüche 1 bis 18, **dadurch gekennzeichnet, dass** das Gehäuse (1) im ersten Aufnahmebereich (4) auf zwei gegenüberliegenden Seiten jeweils einen Anschlussbereich (23) zum Anschluss an die mediumsführende Rohrleitung aufweisen, wobei zumindest der Werkstoff des Anschlussbereiches (23) kompatibel mit dem Werkstoff der Rohrleitung ist.

20. Drehschieber nach mindestens einem der Ansprüche 1 bis 19, **dadurch gekennzeichnet, dass** der Anschlussbereich (23) als eine Etektroschweissmuffe ausgebildet ist.

21. Drehschieber nach mindestens einem der Ansprüche 1 bis 20, **dadurch gekennzeichnet, dass** im zweiten Aufnahmebereich (5) einen Abschlussdeckel (7) zum Abschluss des zweiten Aufnahmebereiches (5) und zur Abdeckung des Gehäuses (1) angeordnet ist.

22. Drehschieber nach mindestens einem der Ansprüche 1 bis 21, **dadurch gekennzeichnet, dass** im Antriebsbereich (3) ein Verschlussstück (26) zum Abschluss des Antriebsbereiches (3) und des Gehäuses (1) angeordnet ist.

23. Drehschieber nach mindestens einem der Ansprüche 1 bis 22, **dadurch gekennzeichnet, dass** einen Antriebsmotor mit der Spindel (16) verbindbar angeordnet ist.

24. Drehschieber nach mindestens einem der Ansprüche 1 bis 23, **dadurch gekennzeichnet, dass** an dem Gehäuse (1) eine Entlüftungsvorrichtung (24) zur Entlüftung des Mediumsdruckes angeordnet ist.

## Claims

1. Rotary slide for a medium-carrying pipeline, comprising a housing (1) capable of being installed with two connection regions (23) between two pipeline ends and having a stop member (9) for shutting off the pipeline and having an actuating device (8) for actuating the stop member, the housing (1) possessing a first reception region (4) for receiving the stop member (9) in the closed position of the rotary slide, a second reception region (5) for receiving the stop member (9) in the open position of the rotary slide and a drive region (3) for receiving the actuating device (8), the drive region (3) being arranged in the housing (1) separately from the first and the second reception region (4, 5), **characterized in that** the actuating device (8) has a lever arm (14), a nut (15) and a spindle (16), the spindle (16) being arranged perpendicularly to the axis (X) of the connection regions (23).

2. Rotary slide according to Claim 1, **characterized in that** the actuating device (8) is arranged in the drive region (3) so as to be sealed off relative to the medium in the first and the second reception region (4, 5).

3. Rotary slide according to at least one of Claims 1 or 2, **characterized in that** the drive region (3), the first reception region (4) and at least the greatest part of the second reception region (5) are designed as a one-piece housing (1).

4. Rotary slide according to at least one of Claims 1 to 3, **characterized in that** both the reception regions (4, 5) and the drive region (3) form three regions of the housing (1) which are essentially of equal size, as seen in the direction of the pipeline axis X.

5. Rotary slide according to at least one of Claims 1 to 4, **characterized in that**, as seen in the direction of the pipeline axis X, the reception regions (4, 5) and the drive region (3) are arranged adjacently to one another in the housing (1) essentially in the manner of an equilateral triangle.

6. Rotary slide according to at least one of Claims 1 to 5, **characterized in that** the housing (1) is essentially designed virtually mirror-symmetrically with respect to a mirror surface Y running through the housing perpendicularly to the pipeline axis X.

7. Rotary slide according to at least one of Claims 1 to 6, **characterized in that** the housing (1), together with the reception regions (4, 5), and the drive region (3) are produced in each case from a corrosion-resistant material.

8. Rotary slide according to at least one of Claims 1 to 7, **characterized in that** the housing (1), together with the reception regions (4, 5), and the drive region (3) are produced in each case from a mould in a plastic injection-moulding method.

9. Rotary slide according to at least one of Claims 1 to 8, **characterized in that** all the regions of the shut-off member which may be touched by the medium are produced from a corrosion-resistant material.

10. Rotary slide according to at least one of Claims 1 to 9, **characterized in that** all the regions of the shut-off member which may be touched by the medium are produced from a straightforward or reinforced plastic material.

11. Rotary slide according to at least one of Claims 1 to 10, **characterized in that** a torque limitation device (21) for limiting the torque of the actuating device (8) is arranged.

12. Rotary slide according to at least one of Claims 1 to 11, **characterized in that** the torque limitation device is designed, for example, as a slipping clutch (21) .

13. Rotary slide according to at least one of Claims 1 to 12, **characterized in that** the actuating device (8) can be produced essentially from metal.

14. Rotary slide according to at least one of Claims 1 to 13, **characterized in that** the actuating device (8) has a spindle (16), the spindle being arranged so as to be operatively connected to the stop member (9) by means of a nut (15) and a lever arm (14).

15. Rotary slide according to at least one of Claims 1 to 14, **characterized in that** the stop member (9) and the lever arm (14) are firmly connected to one another by means of a common rotary bearing (17), the rotary bearing being arranged in the housing (1) at the interface between the first reception region (4), the second reception region (5) and the drive region (3).

16. Rotary slide according to at least one of Claims 1 to 15, **characterized in that** seals (20) for sealing against contact by the medium are arranged between the rotary bearing (17) and the medium.

17. Rotary slide according to at least one of Claims 1 to 16, **characterized in that** a position indicator (25) for indicating the slide position is arranged so as to be connectable to the spindle (16).

18. Rotary slide according to at least one of Claims 1 to 17, **characterized in that** the position indicator (25) is designed as a mechanical, electrical or electromagnetic indicator capable of being read off at a distance.

19. Rotary slide according to at least one of Claims 1 to 18, **characterized in that** the housing (1) has in the first reception region (4), on each of two opposite sides, a connection region (23) for connection to the medium-carrying pipeline, at least the material of the connection region (23) being compatible with the material of the pipeline.

20. Rotary slide according to at least one of Claims 1 to 19, **characterized in that** the connection region (23) is designed as an electric welding sleeve.

21. Rotary slide according to at least one of Claims 1 to 20, **characterized in that** a closing cover (7) for closing off the second reception region (5) and for covering the housing (1) is arranged in the second reception region (5).

22. Rotary slide according to at least one of Claims 1 to 21, **characterized in that** a closing piece (26) for closing off the drive region (3) and the housing (1) is arranged in the drive region (3).

23. Rotary slide according to at least one of Claims 1 to 22, **characterized in that** a drive motor is arranged so as to be connectable to the spindle (16).

24. Rotary slide according to at least one of Claims 1 to 23, **characterized in that** a venting device (24) for venting the medium pressure is arranged on the housing (1).

## Revendications

1. Tiroir rotatif pour une conduite tubulaire transportant des fluides, comprenant un boîtier (1) avec deux zones de raccord (23) pouvant être installé entre deux extrémités de conduite tubulaire, avec un organe d'arrêt (9) pour bloquer la conduite tubulaire et avec un dispositif d'actionnement (8) pour actionner l'organe d'arrêt, le boîtier (1) présentant une première zone de logement (4) pour recevoir l'organe d'arrêt (9) dans la position fermée du tiroir rotatif, une deuxième zone de logement (5) pour recevoir l'organe d'arrêt (9) dans la position ouverte du tiroir rotatif et une zone d'entraînement (3) pour recevoir le dispositif d'actionnement (8), la zone d'entraînement (3) étant disposée dans le boîtier (1) de manière séparée de la première et de la deuxième zone de logement (4, 5), **caractérisé en ce que** le dispositif d'actionnement (8) présente un bras de levier (14), un écrou (15) et une broche (16), la broche (16) étant disposée perpendiculairement à l'axe (X) des zones de raccord (23).

2. Tiroir rotatif selon la revendication 1, **caractérisé en ce que** le dispositif d'actionnement (8) est disposé dans la zone d'entraînement (3) de manière étanche vis-à-vis du fluide dans la première et dans la deuxième zone de logement (4, 5) .

3. Tiroir rotatif selon au moins l'une quelconque des revendications 1 ou 2, **caractérisé en ce que** la zone d'entraînement (3), la première zone de logement (4) et au moins la majeure partie de la deuxième zone de logement (5) sont réalisées sous la forme d'un boîtier (1) d'une seule pièce.

4. Tiroir rotatif selon au moins l'une quelconque des revendications 1 à 3, **caractérisé en ce que** les zones de logement (4, 5) ainsi que la zone d'entraînement (3), vues dans la direction de l'axe X de la conduite tubulaire, forment trois zones du boîtier (1) essentiellement de même taille.

5. Tiroir rotatif selon au moins l'une quelconque des revendications 1 à 4, **caractérisé en ce que** les zones de logement (4, 5) et la zone d'entraînement (3), vues dans la direction de l'axe X de la conduite tubulaire, sont disposées essentiellement à la manière d'un triangle équilatéral les unes à côté des autres dans le boîtier (1).

6. Tiroir rotatif selon au moins l'une quelconque des revendications 1 à 5, **caractérisé en ce que** le boîtier (1) est réalisé pratiquement symétriquement essentiellement par rapport à une surface spéculaire Y s'étendant perpendiculairement à l'axe X de la conduite tubulaire à travers le boîtier.

7. Tiroir rotatif selon au moins l'une quelconque des revendications 1 à 6, **caractérisé en ce que** le boîtier (1) avec les zones de logement (4, 5) et la zone d'entraînement (3) sont chacun réalisés en un matériau résistant à la corrosion.

8. Tiroir rotatif selon au moins l'une quelconque des revendications 1 à 7, **caractérisé en ce que** le boîtier (1) avec les zones de logement (4, 5) et la zone d'entraînement (3) sont à chaque fois réalisés en matière fondue suivant un procédé de moulage par injection de plastique.

9. Tiroir rotatif selon au moins l'une quelconque des revendications 1 à 8, **caractérisé en ce que** toutes les zones du dispositif de blocage qui peuvent entrer en contact avec le fluide sont réalisées en un matériau résistant à la corrosion.

10. Tiroir rotatif selon au moins l'une quelconque des revendications 1 à 9, **caractérisé en ce que** toutes les zones du dispositif de blocage qui peuvent entrer en contact avec le fluide sont réalisées en un matériau en plastique pur ou renforcé.

11. Tiroir rotatif selon au moins l'une quelconque des revendications 1 à 10, **caractérisé en ce qu'**un dispositif pour la limitation du couple (21) est prévu pour limiter le couple du dispositif d'actionnement (8).

12. Tiroir rotatif selon au moins l'une quelconque des revendications 1 à 11, **caractérisé en ce que** le dispositif de limitation du couple est réalisé par exemple sous forme d'accouplement à glissement (21).

13. Tiroir rotatif selon au moins l'une quelconque des revendications 1 à 12, **caractérisé en ce que** le dispositif d'actionnement (8) peut être fabriqué essentiellement en métal.

14. Tiroir rotatif selon au moins l'une quelconque des revendications 1 à 13, **caractérisé en ce que** le dispositif d'actionnement (8) présente une broche (16), la broche étant disposée en liaison coopérante avec l'organe d'arrêt (9) au moyen d'un écrou (15) et d'un bras de levier (14).

15. Tiroir rotatif selon au moins l'une quelconque des revendications 1 à 14, **caractérisé en ce que** l'organe d'arrêt (9) et le bras de levier (14) sont connectés fixement l'un à l'autre au moyen d'un palier rotatif commun (17), le palier rotatif étant disposé dans le boîtier (1) au niveau de l'interface entre la première zone de logement (4), la deuxième zone de logement (5) et la zone d'entraînement (3).

16. Tiroir rotatif selon au moins l'une quelconque des revendications 1 à 15, **caractérisé en ce que** des joints d'étanchéité (20) sont disposés entre le palier rotatif (17) et le fluide, pour l'étanchéité vis-à-vis d'un contact par le fluide.

17. Tiroir rotatif selon au moins l'une quelconque des revendications 1 à 16, **caractérisé en ce qu'**un indicateur de position (25) pour indiquer la position du tiroir est disposé de manière à pouvoir être connecté à la broche (16).

18. Tiroir rotatif selon au moins l'une quelconque des revendications 1 à 17, **caractérisé en ce que** l'indicateur de position (25) est réalisé sous forme d'indicateur mécanique, électrique ou électromagnétique pouvant être lu à distance.

19. Tiroir rotatif selon au moins l'une quelconque des revendications 1 à 18, **caractérisé en ce que** le boîtier (1) présente, dans la première zone de logement (4), sur deux côtés opposés, à chaque fois une zone de raccord (23) pour le raccordement à la conduite tubulaire transportant un fluide, au moins le matériau de la zone de raccord (23) étant compatible avec le matériau de la conduite tubulaire.

20. Tiroir rotatif selon au moins l'une quelconque des revendications 1 à 19, **caractérisé en ce que** la zone de raccord (23) est réalisée sous la forme d'un manchon électrosoudé.

21. Tiroir rotatif selon au moins l'une quelconque des revendications 1 à 20, **caractérisé en ce que** dans la deuxième zone de logement (5) est disposé un couvercle de fermeture (7) pour la fermeture de la deuxième zone de logement (5) et pour recouvrir le boîtier (1).

22. Tiroir rotatif selon au moins l'une quelconque des revendications 1 à 21, **caractérisé en ce que** dans la zone d'entraînement (3) est disposée une pièce de fermeture (26) pour la fermeture de la zone d'entraînement (3) et du boîtier (1).

23. Tiroir rotatif selon au moins l'une quelconque des revendications 1 à 22, **caractérisé en ce qu'**un moteur d'entraînement est disposé de manière à pouvoir être connecté à la broche (16).

24. Tiroir rotatif selon au moins l'une quelconque des revendications 1 à 23, **caractérisé en ce qu'**un dispositif de ventilation (24) pour la ventilation de la pression du fluide est disposé sur le boîtier (1).
